# EUROPÄISCHE PATENTANMELDUNG

(11) **EP 4 717 566 A1**
(43) Veröffentlichungstag der Anmeldung: **01.04.2026**
(21) Anmeldenummer: 25204984.6
(22) Anmeldetag: 26.09.2025
(51) Int. Cl.: B62H 3/12

(54) **ZYLINDERFÖRMIGE FAHRRADAUFHÄNGUNG ZUM LAGERN VON ELEKTRO-FAHRRÄDERN**

(30) Priorität: 27.09.2024 DE 202024105576 U
(71) Anmelder: Gronard GmbH, 81737 München (DE)
(72) Erfinder: GRONARD, Felix, 81737 München (DE)
(74) Vertreter: Bardehle Pagenberg Partnerschaft mbB Patentanwälte Rechtsanwälte

(57) **Zusammenfassung**

Die Erfindung betrifft eine Fahrradaufhängung zum Lagern von Elektro-Fahrrädern, die Fahrradaufhängung umfassend: einen im Wesentlichen länglichen und/oder zylinderförmigen Hauptkörper; eine Haltevorrichtung, die an dem zylinderförmigen Hauptkörper befestigt ist, umfassend: eine obere Kranzkonstruktion umfassend: eine Vielzahl von Montierelementen, die mit dem im Wesentlichen länglichen und/oder zylinderförmigen Hauptkörper gekoppelt sind und um diesen im Wesentlichen kreisförmig angeordnet sind; eine Vielzahl von Aufnahmevorrichtungen, die jeweils an mindestens einem der Vielzahl von Montierelementen befestigt sind, wobei jede Aufnahmevorrichtung der Vielzahl von Aufnahmevorrichtungen eingerichtet ist, ein erstes Rad eines Fahrrads aufzunehmen; eine untere Kranzkonstruktion umfassend eine Vielzahl von Stützvorrichtungen, wobei jede Stützvorrichtung der Vielzahl von Stützvorrichtungen einer Aufnahmevorrichtung der Vielzahl von Aufnahmevorrichtungen zugeordnet ist, und jede Stützvorrichtung der Vielzahl von Stützvorrichtungen eingerichtet ist, ein zweites Rad des Fahrrads zu stützen; und ein Bodenelement in mechanischer Kopplung mit dem Hauptkörper, wobei der Hauptkörper unter Zuhilfenahme von Kugellagern und/oder Rollenlagern drehbar um seine Längsachse mit dem Bodenelement gekoppelt ist, wobei das Bodenelement eine Wandstärke von mindestens 10 mm aufweist, und/oder die Kugellager Rillenkugellager und Kegelrollenlager umfassen, und/oder das Bodenelement eine Vollmaterial-Drehwelle beinhaltet, die mit den Kugellagern gekoppelt ist und einen Durchmesser von mindestens 40 mm, vorzugsweise mindestens 43 mm, bevorzugt mindestes 45 und meist bevorzugt mindestens 46 mm aufweist, und/oder die Montierelemente U-Profile sind, vorzugsweise gelaserte U-Profile, wobei sich die Flügel der U-Profile in Richtung des im Wesentlichen länglichen und/oder zylinderförmigen Hauptkörper erstrecken.

## Beschreibung

### TECHNISCHES GEBIET

Die vorliegende Erfindung betrifft eine Fahrradaufhängung zum Lagern von Elektro-Fahrrädern.

### HINTERGRUND

In den letzten Jahren ist die Nachfrage nach Elektro-Fahrrädern (auch E-Bikes genannt) erheblich gestiegen. Elektro-Fahrräder bieten eine umweltfreundliche und bequeme Alternative zu herkömmlichen Fahrrädern, insbesondere in städtischen Gebieten. Der technologische Fortschritt hat dazu geführt, dass Elektro-Fahrräder immer leistungsfähiger und erschwinglicher werden, was zu ihrer zunehmenden Verbreitung beiträgt.

Mit der steigenden Anzahl von Elektro-Fahrrädern auf dem Markt und deren Nutzung im Alltag steigt auch der Bedarf an geeigneten Abstellmöglichkeiten. Im Vergleich zu herkömmlichen Fahrrädern sind Elektro-Fahrräder aufgrund ihrer elektrischen Komponenten und stärkeren Rahmen jedoch deutlich schwerer. Das durchschnittliche Gewicht eines Elektro-Fahrrads liegt oft zwischen 20 und 30 Kilogramm, während herkömmliche Fahrräder in der Regel nur etwa 10 bis 15 Kilogramm wiegen.

Diese Gewichtsunterschiede stellen eine Herausforderung dar, wenn es darum geht, sichere und stabile Abstellmöglichkeiten zu schaffen. Insbesondere vertikale Abstellmöglichkeiten, die platzsparend und in beengten städtischen Umgebungen bevorzugt werden, sind oft nicht für die Belastungen ausgelegt, die durch Elektro-Fahrräder entstehen, was zu Sicherheitsrisiken und Beschädigungen führen kann.

Es besteht daher Bedarf an neuen Designs und Konstruktionen für vertikale Abstellmöglichkeiten, die robust genug sind, um das Gewicht von Elektro-Fahrrädern sicher zu tragen. Solche Abstellmöglichkeiten müssen nicht nur stabil und belastbar, sondern auch benutzerfreundlich sein, um eine einfache Handhabung und eine sichere Aufbewahrung der Elektro-Fahrräder zu gewährleisten.

Die vorliegende Erfindung zielt darauf ab, eine zylinderförmige Fahrradaufhängung zum Lagern von Elektro-Fahrrädern bereitzustellen, die den speziellen Anforderungen hinsichtlich Gewicht und Stabilität gerecht wird.

### ZUSAMMENFASSUNG

Die Aufgabe der vorliegenden Erfindung ist es eine Fahrradaufhängung zum Lagern von Elektro-Fahrrädern bereitzustellen, die eine oder mehrere der oben genannten Aufgaben löst.

Ein erster Aspekt der Erfindung betrifft eine Fahrradaufhängung zum Lagern von Elektro-Fahrrädern. Die Fahrradaufhängung umfasst einen im Wesentlichen länglichen und/oder zylinderförmigen Hauptkörper und eine Haltevorrichtung, die an dem zylinderförmigen Hauptkörper befestigt ist. Die Haltevorrichtung umfasst eine obere Kranzkonstruktion umfassend eine Vielzahl von Montierelementen, die mit dem im Wesentlichen länglichen und/oder zylinderförmigen Hauptkörper gekoppelt sind und um diesen im Wesentlichen kreisförmig angeordnet sind, eine Vielzahl von Aufnahmevorrichtungen, die an mindestens einer der Vielzahl von Montierelementen befestigt sind, wobei jede Aufnahmevorrichtung der Vielzahl von Aufnahmevorrichtungen eingerichtet ist, ein erstes Rad eines Fahrrads aufzunehmen und eine untere Kranzkonstruktion umfassend eine Vielzahl von Stützvorrichtungen, wobei jede Stützvorrichtung der Vielzahl von Stützvorrichtungen einer Aufnahmevorrichtung der Vielzahl von Aufnahmevorrichtungen zugeordnet ist, und jede Stützvorrichtung der Vielzahl von Stützvorrichtungen eingerichtet ist ein zweites Rad des Fahrrads zu stützen. Die Fahrradaufhängung umfasst ferner ein Bodenelement in mechanischer Kopplung mit dem Hauptkörper, wobei der Hauptkörper unter Zuhilfenahme von Kugellagern drehbar um seine Längsachse mit dem Bodenelement gekoppelt ist, wobei das Bodenelement eine Wandstärke von mindestens 10 mm auf-weist, und/oder die Kugellager Rillenkugellager und Kegelrollenlager aufweisen, und/oder das Bodenelement eine Vollmaterial-Drehwelle beinhaltet, die mit den Kugellagern gekoppelt ist und einen Durchmesser von mindestens 40 mm, vor-zugsweise mindestens 43 mm, bevorzugt mindestes 45 und meist bevorzugt mindestens 46 mm aufweist, und/oder die Montierelement U-Profile sind, vorzugsweise gelaserte U-Profile, wobei sich die Flügel der U-Profile in Richtung im Wesentlichen länglichen und/oder zylinderförmigen Hauptkörper erstrecken.

Die obige Fahrradaufhängung ermöglich auch schwere Fahrräder, wie Elektrofahrräder platzsparend zu lagern. Insbesondere können durch obige Aufhängung mehrere Elektrofahrräder mit reduziertem Flächenbedarf sicher und stabil gelagert werden.

In einer ersten Implementierung der Fahrradaufhängung zum Lagern von Elektro-Fahrrädern gemäß dem ersten Aspekt, umfasst die Vielzahl von Aufnahmevorrichtungen ferner eine Vielzahl von Hebeln, wobei jeder Hebel der Vielzahl von Hebeln mit jeweils einer Aufnahmevorrichtung der der Vielzahl von Aufnahmevorrichtungen mechanisch gekoppelt ist und eingerichtet ist, die jeweilige eine Aufnahmevorrichtung zu bewegen.

In einer weiteren Implementierung der Fahrradaufhängung zum Lagern von Elektro-Fahrrädern gemäß dem ersten Aspekt umfassen die Vielzahl von Hebeln ferner jeweils mindestens ein Eingriffselement, wobei das mindestens eine Eingriffselement eingerichtet ist, mechanisch mit dem ersten Rad des Fahrrads gekoppelt zu werden, wobei das mindestens eine Eingriffselement vorzugsweise an einem distalen Ende des Hebels positioniert ist.

Obige Implementierung ermöglicht es Fahrräder, insbesondere Elektrofahrräder, ohne großen Kraftaufwand in der Fahrradaufhängung aufzuhängen.

In einer weiteren Implementierung der Fahrradaufhängung zum Lagern von Elektro-Fahrrädern gemäß dem ersten Aspekt sind die Vielzahl von Aufnahmevorrichtungen und die Vielzahl von Stützvorrichtungen um den Hauptkörper angeordnet, wobei die Vielzahl von Aufnahmevorrichtungen im Wesentlichen in einer ersten Position in Längsrichtung um den Hauptkörper angeordnet sind und die Vielzahl von Stützvorrichtung im Wesentlichen in einer zweiten Position in Längsrichtung um den Hauptkörper angeordnet sind, wobei die Vielzahl von Stützvorrichtungen in der Längsrichtung näher am Bodenelement angeordnet ist.

In einer weiteren Implementierung der Fahrradaufhängung zum Lagern von Elektro-Fahrrädern gemäß dem ersten Aspekt umfasst das Bodenelement ferner Befestigungselemente, um mit einem Boden, z.B. einem Fundament oder einer Gegenplatte, verbunden zu werden, wobei das Bodenelement eingerichtet ist mit dem Boden verbunden zu werden, dass der Hauptkörper im Wesentlichen senkrecht zum Boden angeordnet ist, wenn das Bodenelement mit dem Boden verbunden ist.

Obige Implementierung ermöglicht es die Fahrradaufhängung sicher am Boden zu fixieren, sodass auch bei hohen Lasten Instabilitäten verhindert werden.

In einer weiteren Implementierung der Fahrradaufhängung zum Lagern von Elektro-Fahrrädern gemäß dem ersten Aspekt umfassen die Stützvorrichtungen längliche, vor-zugsweise gebogene, Metallbleche, die in der Längsrichtung des im Wesentlichen länglichen und/oder zylinderförmigen Hauptkörpers angeordnet sind und im Wesentlichen eine U- oder V-Form zur Aufnahme des zweiten Rads aufweisen.

In einer weiteren Implementierung der Fahrradaufhängung zum Lagern von Elektro-Fahrrädern gemäß dem ersten Aspekt erstrecken sich die Schenkel der im Wesentlichen U- oder V-förmigen Metallbleche in eine Richtung entgegengesetzt des im Wesentlichen länglichen und/oder zylinderförmigen Hauptkörpers.

Obige Implementierung stellt eine Führungsschiene für die zweiten Räder der Fahrräder bereit, wodurch das Aufhängen der Fahrräder vereinfacht wird.

In einer weiteren Implementierung der Fahrradaufhängung zum Lagern von Elektro-Fahrrädern gemäß dem ersten Aspekt sind die obere und untere Kranzkonstruktionen kreisförmig um den Hauptkörper angeordnet.

In einer weiteren Implementierung der Fahrradaufhängung zum Lagern von Elektro-Fahrrädern gemäß dem ersten Aspekt sind die Vielzahl von Montierelementen an einer ersten ringförmigen Befestigungseinheit befestigt, wobei die erste ringförmige Befestigungseinheit um den im Wesentlichen länglichen und/oder zylinderförmigen Hauptkörper angeordnet ist.

In einer weiteren Implementierung der Fahrradaufhängung zum Lagern von Elektro-Fahrrädern gemäß dem ersten Aspekt, ist die erste ringförmige Befestigungseinheit mit Streben an dem im Wesentlichen länglichen und/oder zylinderförmigen Hauptkör-per befestigt.

Durch obige Implementierung wird die Stabilität der Kranzkonstruktion zusätzlich erhöht, insbesondere in Hinblick auf hohe Nutzlasten, wie durch Elektrofahrräder hervorgerufen.

In einer weiteren Implementierung der Fahrradaufhängung zum Lagern von Elektro-Fahrrädern gemäß dem ersten Aspekt, sind die Vielzahl von Stützelementen an einer zweiten ringförmigen Befestigungseinheit befestigt, wobei die zweite ringförmige Befestigungseinheit um den im Wesentlichen länglichen und/oder zylinderförmigen Hauptkörper angeordnet ist.

In einer weiteren Implementierung der Fahrradaufhängung zum Lagern von Elektro-Fahrrädern gemäß dem ersten Aspekt, ist die zweite ringförmige Befestigungseinheit mit Streben an dem im Wesentlichen länglichen und/oder zylinderförmigen Haupt-körper befestigt.

Durch obige Implementierung wird die Stabilität der Kranzkonstruktion zusätzlich erhöht, insbesondere in Hinblick auf hohe Nutzlasten, wie durch Elektrofahrräder hervorgerufen.

In einer weiteren Implementierung der Fahrradaufhängung zum Lagern von Elektro-Fahrrädern gemäß dem ersten Aspekt, enthalten die Streben Rechteckrohrprofile.

Die Rechteckrohrprofile verbessern die Stabilität der Kranzkonstruktion weiter.

In einer weiteren Implementierung der Fahrradaufhängung zum Lagern von Elektro-Fahrrädern gemäß dem ersten Aspekt, weisen die obere und/oder die untere Kranz-konstruktion drei Streben auf.

In einer weiteren Implementierung der Fahrradaufhängung zum Lagern von Elektro-Fahrrädern gemäß dem ersten Aspekt, weist die Vielzahl von Montierelementen eine erste Vielzahl von Bohrlöchern, die in Längsrichtung des im Wesentlichen länglichen und/oder zylinderförmigen Hauptkörpers beabstandet sind, auf, und die Vielzahl von Aufnahmevorrichtungen eine zweite Vielzahl von Bohrlöchern auf, die den entsprechenden Bohrlöchern der Montierelemente entsprechen.

In einer weiteren Implementierung der Fahrradaufhängung zum Lagern von Elektro-Fahrrädern gemäß dem ersten Aspekt, sind die erste und zweite Vielzahl von Bohrlöchern jeweils rotationssymmetrisch zueinander angeordnet, dass die erste Vielzahl von Bohrlöchern vor und nach einer Rotation der Aufnahmevorrichtung um 180° den Positionen der zweiten Vielzahl von Bohrlöchern entspricht.

Durch obige Implementierung kann die Höhe der Fahrradaufhängung und damit das Ausnutzen des verfügbaren Platzes in vertikaler Richtung durch Rotation der Aufnahmevorrichtungen angepasst und optimiert werden.

In einer weiteren Implementierung der Fahrradaufhängung zum Lagern von Elektro-Fahrrädern gemäß dem ersten Aspekt, sind die Vielzahl von Aufnahmevorrichtungen und die Vielzahl von Stützelementen im Wesentlichen parallel zum im Wesentlichen länglichen und/oder zylinderförmigen Hauptkörper angeordnet.

In einer weiteren Implementierung der Fahrradaufhängung zum Lagern von Elektro-Fahrrädern gemäß dem ersten Aspekt, sind die Vielzahl von Aufnahmevorrichtungen und die Vielzahl von Stützelementen mit einem im Wesentlichen gleichen Abstand von dem im Wesentlichen länglichen und/oder zylinderförmigen Hauptkörper beabstandet.

In einer weiteren Implementierung der Fahrradaufhängung zum Lagern von Elektro-Fahrrädern gemäß dem ersten Aspekt, weist das Bodenelement einen Zylinder zur Aufnahme des im Wesentlichen länglichen und/oder zylinderförmigen Hauptkörpers auf, wobei der Innendurchmesser des Zylinders im Wesentlichen dem Außen-durchmesser des im Wesentlichen länglichen und/oder zylinderförmigen Hauptkörpers entspricht.

Durch obige Ausgestaltung des Bodenelements kann die aufnehmbare Maximallast der Fahrradaufhängung erhöht werden.

In einer weiteren Implementierung der Fahrradaufhängung zum Lagern von Elektro-Fahrrädern gemäß dem ersten Aspekt, ist der im Wesentlichen längliche und/oder zylinderförmige Hauptkörper, unter Zuhilfenahme der Kugellager, in dem Zylinder drehbar gelagert.

In einer weiteren Implementierung der Fahrradaufhängung, gemäß dem ersten Aspekt, ist der im Wesentlichen längliche und/oder zylinderförmige Hauptkörper, unter Zuhilfenahme der Kugellager, in dem Zylinder drehbar gelagert.

Die Verwendung obiger Kugellager ermöglicht auch bei Hohen Lasten, wie durch Elektrofahrräder hervorgerufen, entstehende Kräfte in Quer- sowie Axialrichtung aufzunehmen.

In einer weiteren Implementierung der Fahrradaufhängung, gemäß dem ersten Aspekt, weist der Zylinder ein Kegelrollenlager an seinem den Kranzkonstruktionen zugewandten Ende und ein Rillenkugellager an seinem dem Boden zugewandten Ende auf.

In einer weiteren Implementierung der Fahrradaufhängung, gemäß dem ersten Aspekt, entspricht der Außendurchmesser des im Wesentlichen länglichen und/oder zylinderförmigen Hauptkörpers dem Innendurchmesser des Kegelrollenlagers.

### KURZBESCHREIBUNG DER FIGUREN

Um die technischen Merkmale von Ausführungsformen der vorliegenden Erfindung deutlicher zu veranschaulichen, werden die begleitenden Zeichnungen, die zur Beschreibung der Ausführungsformen vorgesehen sind, im Folgenden erläutert.
FIG. 1 zeigt eine schematische Darstellung einer Fahrradaufhängung gemäß einer Ausführungsform der Erfindung,
FIG. 2 zeigt eine schematische Seitendarstellung einer Fahrradaufhängung gemäß einer Ausführungsform der Erfindung,
FIG. 3 zeigt eine schematische Darstellung einer Fahrradaufhängung gemäß einer Ausführungsform der Erfindung,
FIG. 4 zeigt eine schematische Seitendarstellung einer Fahrradaufhängung gemäß einer Ausführungsform der Erfindung,
FIG. 5 zeigt eine schematische Darstellung einer Aufnahmevorrichtung gemäß einer Ausführungsform der Erfindung,

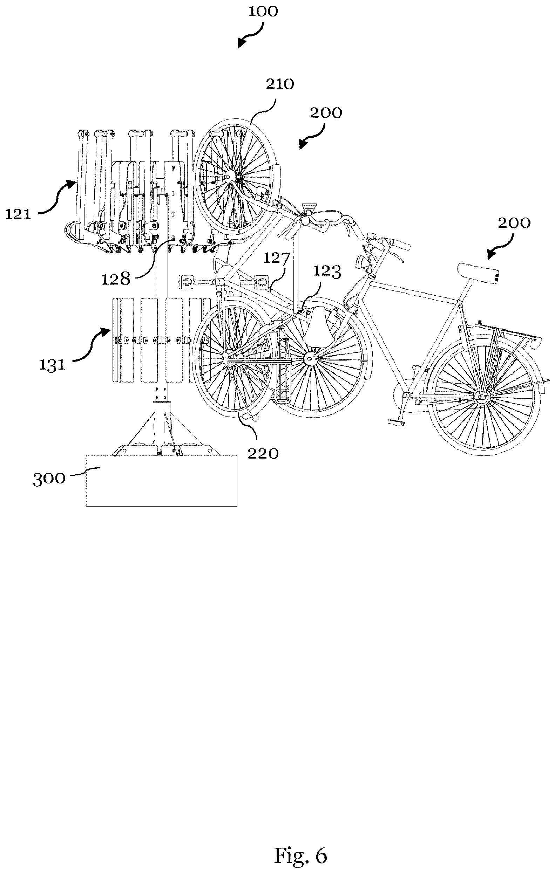

FIG. 6 zeigt eine schematische Seitendarstellung einer Fahrradaufhängung gemäß einer Ausführungsform der Erfindung.

### DETAILLIERTE BESCHREIBUNG

Die vorstehenden Beschreibungen sind nur Ausführungsformen der vorliegenden Erfindung, der Schutzumfang der vorliegenden Erfindung soll dem Schutzumfang der beigefügten Ansprüche unterliegen.

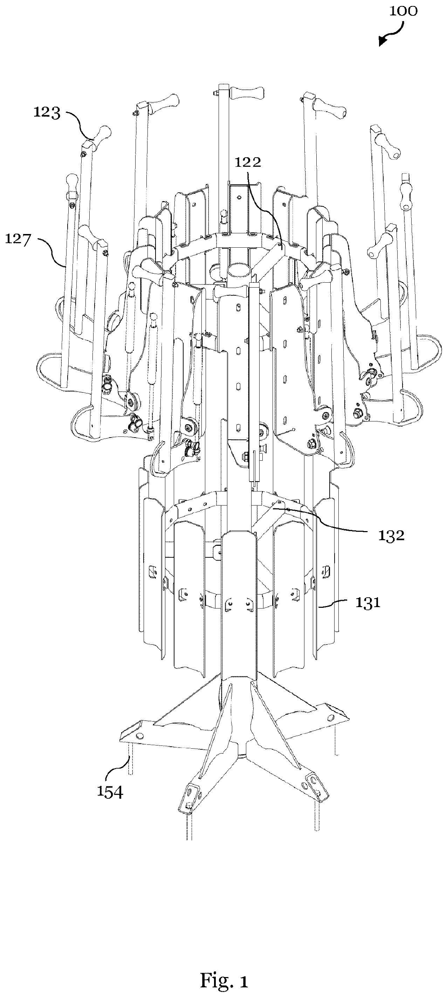

Figur 1 zeigt eine Fahrradaufhängung 100 einer beispielhaften Ausführungsform in einer Schrägansicht. Die Fahrradaufhängung 100 ist eingerichtet Fahrräder 200, und insbesondere Elektro-Fahrräder vertikal zu lagern. Vorzugsweise ist die Fahrradaufhängung 100 eingerichtet 12 Fahrräder aufzunehmen. Die Fahrradaufhängung umfasst einen im Wesentlichen länglichen und/oder zylinderförmigen Hauptkörper 140 und eine Haltevorrichtung 110, die eingerichtet ist mindestens ein Fahrrad 200 aufzunehmen und an dem Hauptkörper 140 befestigt ist. Der Hauptkörper 140 besteht vorzugsweise aus einem Metallwelle. Vorzugsweise umfasst die Metallwelle ein rostfreies Metallmaterial, damit Korrosion des Hauptkörpers 140 reduziert oder verhindert wird. Vorzugsweise ist die Metallwelle eine Vollmaterial-Metallwelle und weist einen Durchmesser von mindestens 40 mm, bevorzugt von mindestens 42 mm, bevorzugter von mindestens 43 mm, noch bevorzugter von mindestens 44 mm, noch bevorzugter von mindestes 45 mm und meist bevorzugt von mindestens 46 mm auf. Die Haltevorrichtung 110 umfasst eine obere Kranzkonstruktion 120 mit einer Vielzahl von Montierelement 124, die mit dem im Wesentlichen länglichen und/oder zylinderförmigen Hauptkörper 140 gekoppelt sind und um diesen im Wesentlichen kreisförmig angeordnet sind und eine Vielzahl von Aufnahmevorrichtungen 121, die an mindestens einer der Vielzahl von Montierelementen 124 befestigt sind, wobei jede Aufnahmevorrichtung der Vielzahl von Aufnahmevorrichtungen eingerichtet ist ein erstes Rad 210 eines Fahrrads 200 aufzunehmen. Ferner umfasst die Haltevorrichtung eine untere Kranzkonstruktion 130 mit einer Vielzahl von Stützvorrichtungen 131, wobei jede Stützvorrichtung 131 der Vielzahl von Stützvorrichtungen einer Aufnahmevorrichtung 121 der Vielzahl von Aufnahmevorrichtungen 121 zugeordnet ist, und jede Stützvorrichtung 131 der Vielzahl von Stützvorrichtungen eingerichtet ist ein zweites Rad 220 des Fahrrads 200 zu stützen. Die Fahrradaufhängung ferner umfassend ein Bodenelement 150 in mechanischer Kopplung mit dem Hauptkörper 140, wobei der Hauptkörper 140 unter Zuhilfenahme von Kugellagern drehbar um seine Längsachse mit dem Bodenelement 150 gekoppelt ist.

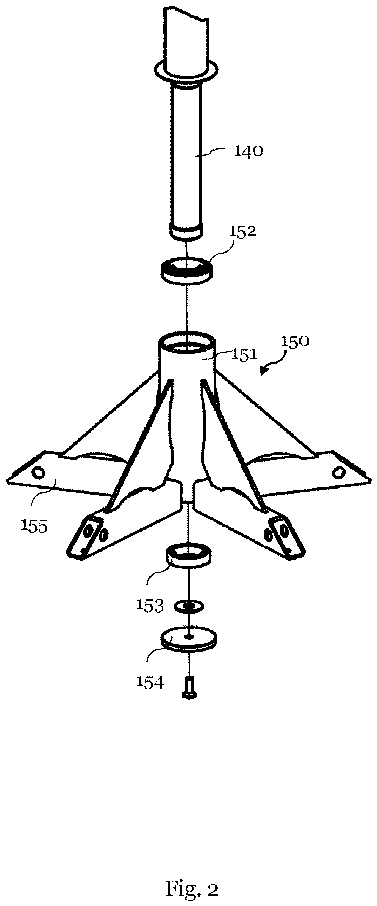

Das Bodenelement 150 wird unter Bezugnahme auf Figur 2 im Detail beschrieben. Figur 2 zeigt eine Explosionsdarstellung eines beispielhaften Bodenelements mit einem Ende des im Wesentlichen länglichen und/oder zylindrischen Hauptkörpers 140. Vorzugsweise umfasst das Bodenelement 150 einen Aufnahmebereich 151, zum Aufnehmen des Hauptkörpers 140 und eine Vielzahl von Stellfüßen 155 mit denen das Bodenelement 150 mit einem Boden 300 gekoppelt werden kann. Vorzugsweise sind die Stellfüße 155 mit dem Aufnahmebereich 151 gekoppelt. Vorzugsweise bilden die Stellfüße eine im Wesentlichen sternförmige Stellfußkonstruktion. In einer bevorzugten Ausführungsform weist das Bodenelement 150 fünf Stellfüße auf, die die sternförmige Stellfußkonstruktion bilden, wobei die Stellfüße 155 mit dem Aufnahmebereich 151 gekoppelt sind und sich von diesem nach außen (relativ zum zentralen Aufnahmebereich 151) erstrecken.

Vorzugsweise hat der Aufnahmebereich 151 eine zumindest teilweise ähnliche Form wie der Hauptkörper 140. Beispielswiese kann der Aufnahmebereich 151 des Bodenelements 150 im Wesentlichen zylinderförmig sein, wenn der Hauptkörper 140 zylinderförmig ist. Beispielsweise kann der Aufnahmebereich 151 ein Metallrohr umfassen. Der Innendurchmesser des Aufnahmebereichs 151 ist vorzugsweise zumindest ähnlich zu dem Außendurchmesser des Hauptkörpers 140, wodurch die Stabilität der Fahrradaufhängung erhöht werden kann. In einer Ausführungsform hat der Aufnahmebereich 151 einen Durchmesser von zumindest 90 mm, bevorzugt von zumindest 95 mm, bevorzugter von mindestens 100 mm, und noch bevorzugter von mindestes 102 mm. In einer Ausführungsform hat der Aufnahmebereich 151 eine Wandstärke von mindestens 8 mm, bevorzugt von mindestens 10 mm, bevorzugter von mindestens 12 mm. Durch die entsprechenden Durchmesser und Wandstärken können sogar große Lasten, wie z.B. durch Elektro-Fahrräder 200 verursacht, durch den Aufnahmebereich 151 sicher aufgenommen werden.

Wie oben beschrieben, ist der Hauptkörper 140 durch Kugellager mechanisch und drehbar um seine Längsachse mit dem Bodenelement 150 gekoppelt. Vorzugsweise umfasst das Bodenelement 150 die Kugellager. Vorzugsweise weisen die Kugellager Rillenkugellager und/oder Kegelrollenlager auf, die eingerichtet sind, auch verhältnismäßig große Lasten, wie ein Elektro-Fahrrad, drehbar zu lagern. Das Beispiel der Figur 2 verwendet zwei Kegelrollenlager, wobei ein erstes Kegelrollenlager an einem ersten Ende des Aufnahmebereichs 151 angeordnet ist und ein zweites Kegelrollenlager an einem zweiten Ende des Aufnahmebereichs 151 angeordnet ist. Das erste Ende des Aufnahmebereichs 151 ist an einem Ende des Aufnahmebereichs angeordnet, das der Haltevorrichtung 110 zugewandt ist. Das zweite Ende des Aufnahmebereichs 151 ist an einem Ende des Aufnahmebereichs 151 angeordnet, das dem Boden 300 zugewandt ist, an dem das Bodenelement 150 befestigt ist/werden kann. Vorzugsweise umfasst das Bodenelement ferner ein Endelement 154, das ein Innenvolumen des Aufnahmebereichs 151 begrenzt, wobei das zweite Kegelrollenlager durch das Endelement 154 im Inneren des Innenvolumens des Aufnahmebereichs 151 montiert ist. Wie in Fig. 2 dargestellt, erstreckt sich ein Ende des Hauptkörper 140 im Aufnahmebereich 151 des Bodenelements 150 und ist mit diesem durch die Kegelrollenlager 152, 153 mit dem Bodenelement drehbar gekoppelt. Durch die Verwendung zweier Kegelrollenlager 152, 153 können in Querachse sowie Axialachse des Hauptkörpers sogar hohe Kräfte, die von einem gelagerten Elektro-Fahrrad 200 ausgehen, aufgenommen werden. Vorzugsweise umfasst das Bodenelement 150 ferner eine oder mehrere gefederte Druckstützen, die die Rotationsbewegung des Hauptkörpers 140 hemmen.

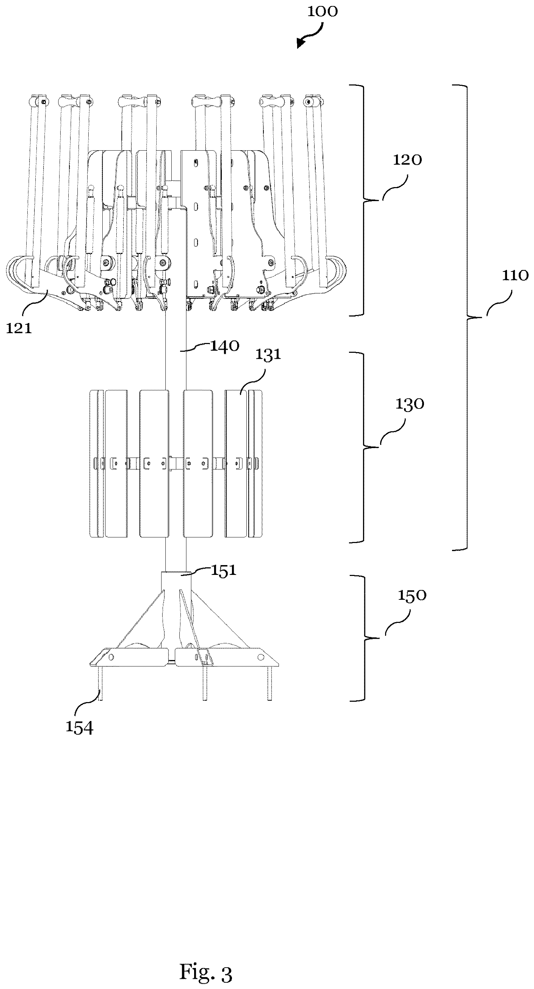

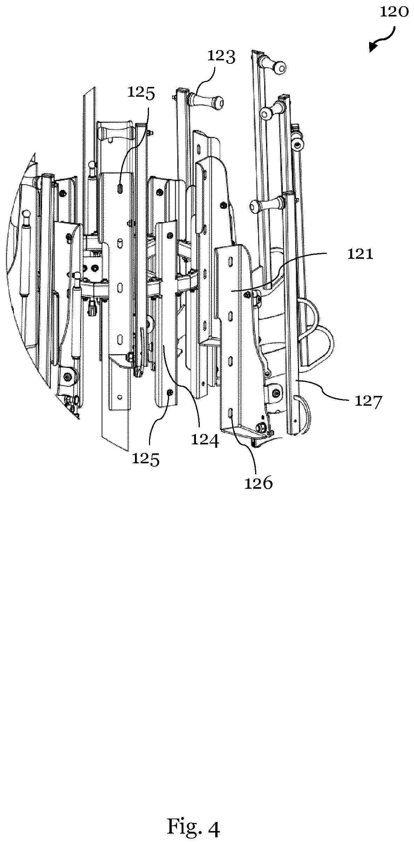

Die Haltevorrichtung 110 umfasst eine obere 120 und eine untere Kranzkonstruktion 130 und wird unter Bezugnahme auf die Figuren 3 und 4 nachfolgend detaillierter beschrieben.

Figur 3 zeigt eine Seitenansicht der Fahrradaufhängung aus Figur 1. Wie unter Bezugnahme auf Figur 1, beschrieben besteht die Fahrradaufhängung aus dem Hauptkörper 140, dem Bodenelement 150 und der Haltevorrichtung 110 zum Aufnehmen des Fahrrads 200. Der Hauptkörper 140 ist mit dem Bodenelement 150 drehbar um seine Längsachse mechanisch gekoppelt. Die Haltevorrichtung 110 umfasst ferner eine obere Kranzkonstruktion 120 umfassend eine Vielzahl von Montierelementen 124, die mit dem im Wesentlichen länglichen und/oder zylinderförmigen Hauptkörper 140 gekoppelt sind und um diesen im Wesentlichen kreisförmig angeordnet sind. Zudem umfasst die obere Kranzkonstruktion 120 eine Vielzahl von Aufnahmevorrichtungen 121, wobei jeweils eine der Vielzahl von Aufnahmevorrichtungen an mindestens einer der Vielzahl von Montierelementen 124 befestigt sind. Jede Aufnahmevorrichtung 121 der Vielzahl von Aufnahmevorrichtungen 121 ist eingerichtet ein erstes Rad 210 des Fahrrads 200 aufzunehmen. Zudem umfasst die Haltevorrichtung 110 eine untere Kranzkonstruktion 130, die eine Vielzahl von Stützvorrichtungen 131 umfasst. Jede Stützvorrichtung 131 der Vielzahl von Stützvorrichtungen 131 ist einer Aufnahmevorrichtung 121 der Vielzahl von Aufnahmevorrichtungen 121 zugeordnet, und jede Stützvorrichtung 131 der Vielzahl von Stützvorrichtungen 131 ist eingerichtet ein zweites Rad 220 des Fahrrads 200 zu stützen. Vorzugsweise umfassen die Stützvorrichtungen 131 längliche, vorzugsweise gebogene, Metallbleche, die in der Längsrichtung des im Wesentlichen länglichen und/oder zylinderförmigen Hauptkörpers 140 angeordnet sind und im Wesentlichen eine U- oder V-Form zur Aufnahme des zweiten Rads (220) aufweisen. Vorzugsweise sind die U- oder V-förmigen Bleche derart angeordnet, dass sich deren Schenkel in eine Richtung entgegen des im Wesentlichen länglichen und/oder zylinderförmigen Hauptkörpers 140 erstrecken. Durch die U-/V-Form der Metallbleche wird das Stützen des zweiten Rads 220 an der Stützvorrichtung 131 vereinfacht/verbessert. In der Ausführungsform der Figur 3, sind die jeweiligen Stützvorrichtungen 131 an jeweils einer Stelle in Längsrichtung mit dem Hauptkörper 140 verbunden. In alternativen Ausführungsformen sind die Stützvorrichtungen 131 an mehreren Stellen in deren Längsrichtung mit dem Hauptkörper 140 verbunden. Beispielsweise sind die Stützvorrichtungen 131 an zwei Stellen mit dem Hauptkörper 140 verbunden. Dadurch kann die Stabilität der Stützvorrichtungen verbessert werden. Vorzugsweise ist die untere Kranzkonstruktion 130, bzw. sind die Stützvorrichtungen 131, derart am Hauptkörper befestigt, dass, wenn das erste Rad 210 des Fahrrads 200 in der oberen Kranzkonstruktion 120 befestigt ist, das zweite Rad 220 ungefähr auf Höhe einer der Stellen ist, an denen die untere Kranzkonstruktion 130, bzw. die Stützvorrichtungen 131 mit dem Hauptkörper verbunden sind. In einer Ausführungsform (nicht dargestellt), sind die Stützvorrichtungen 131 direkt an dem Hauptkörper 140 befestigt. Alternativ, wie in Fig. 3 dargestellt, umfasst die untere Kranzkonstruktion 130 zusätzlich eine ringförmige Befestigungseinheit 132, an der die Stützvorrichtungen 131 befestigt sind, wobei die ringförmige Befestigungseinheit 132 um den im Wesentlichen länglichen und/oder zylinderförmigen Hauptkörper 140 angeordnet ist. Vorzugsweise ist die ringförmige Befestigungseinheit 132 mit zwei oder mehreren Streben mit dem Hauptkörper verbunden. Bevorzugterweise ist die ringförmige Befestigungseinheit 132 mit drei Streben an dem Hauptkörper verbunden. Dadurch wird die Stabilität der unteren Kranzkonstruktion 130, insbesondere für Elektro-Fahrräder, zusätzlich verstärkt. In bevorzugten Ausführungsformen umfassen die Streben Rechteckrohrprofile aus Metallmaterial.

In Figur 4 ist die obere Kranzkonstruktion 120 oberer Ausführungsformen, und insbesondere der Figuren 1 und 3, weiter detailliert gezeigt. Wie bereits zuvor beschrieben, umfasst die obere Kranzkonstruktion 120 eine Vielzahl von

Montierelementen 120, sowie eine Vielzahl von Aufnahmevorrichtungen 121, wobei jeweils eine Aufnahmevorrichtung 121 der Vielzahl von Aufnahmevorrichtungen 121 an jeweils mindestens einer der Vielzahl von Montierelementen 124 befestigt ist. Die obere Kranzkonstruktion 120 kann, wie die untere Kranzkonstruktion 130, an dem Hauptkörper 140 angebracht sein. Das heißt, die Montierelemente 124 können direkt am Hauptkörper 140 befestigt sein, oder alternativ, wie in den Figuren 1 und 4 gezeigt, kann die obere Kranzkonstruktion 120 zusätzlich eine ringförmige Befestigungseinheit 122 umfassen, an denen die Montierelemente 124 befestigt sind, wobei die ringförmige Befestigungseinheit 122 um den im Wesentlichen länglichen und/oder zylinderförmigen Hauptkörper 140 angeordnet ist. Vorzugsweise ist die ringförmige Befestigungseinheit 122 mit zwei oder mehreren Streben mit dem Hauptkörper verbunden. Bevorzugterweise ist die ringförmige Befestigungseinheit 122 mit drei Streben mit dem Hauptkörper verbunden. Dadurch wird die Stabilität der oberen Kranzkonstruktion 120, insbesondere für Elektro-Fahrräder, zusätzlich verstärkt. In bevorzugten Ausführungsformen umfassen die Streben Rechteckrohrprofile aus Metallmaterial.

Vorzugsweise umfassen die Montierelemente 124 eine flache Seite, die es ermöglicht, dass die Aufnahmevorrichtungen 121 an dieser befestigt werden können, sowie eine U- oder V-förmige Seite, die mit dem Hauptkörper 140 und/oder der Befestigungseinheit 122 gekoppelt sind (siehe Fig. 1). Dabei können der Hauptkörper 140 und/oder die ringförmige Befestigungseinheit 122 Schlitze zum Aufnehmen der Schenkel der U- oder V-förmigen Seite aufweisen. Zusätzlich, oder alternativ können die Schenkel der U- oder V-förmigen Seite jeweils mindestens einen Flansch aufweisen, der an einer Seite des Hauptkörpers 140 und/oder der ringförmigen Befestigungseinheit 122 montiert werden kann. Ein solches Beispiel ist in Fig. 1 dargestellt. In diesem Beispiel weist die U- oder V-förmige Seite zwei U- oder V-förmige Elemente auf, die jeweils ein Paar Flansche aufweisen. Ein erstes Paar der Flansche eines ersten U- oder V-förmigen Elements ist an einer ersten Seite der ringförmigen Befestigungseinheit 122 montiert, und ein zweites Paar der Flansche eines zweiten U- oder V-förmigen Elements ist an einer zweiten Seite der ringförmigen Befestigungseinheit 122 montiert. Dadurch wird die Stabilität der Montierelemente 124 zusätzlich erhöht, dass auch Elektro-Fahrräder von der Fahrradaufhängung aufgenommen werden können.

Vorzugsweise umfassen die Montierelemente 124 ein oder mehrere Bohrlöcher 125. Die ein oder mehreren Bohrlöcher 125 können jeweils die gleiche Form, oder eine oder mehrere Verschiedene Formen aufweisen. Vorzugsweise sind die ein oder mehreren Bohrlöcher 125 in der Längsrichtung des Hauptkörpers 140 versetzt angeordnet, bevorzugt mit einem Versatz in Längsrichtung des Hauptkörpers 140 von jeweils 50 mm. Figur 4 zeigt eine Ausführungsform mit vier Bohrlöchern 125. Die Bohrlöcher vereinfachen die Montage der Aufnahmevorrichtungen 121 an den Montierelementen 124. Beispielsweise können, wie in Fig. 4 gezeigt, die Aufnahmevorrichtungen 121 ein oder mehrere Bohrlöcher 126 aufweisen, die an den jeweiligen Aufnahmevorrichtungen 121 derart positioniert sind, dass sie den jeweiligen Bohrlöchern 125 der jeweiligen Montierelemente 124 entsprechen. Vorzugsweise sind die ein oder mehreren Bohrlöcher 126 in der Längsrichtung des Hauptkörpers 140 versetzt angeordnet, bevorzugt mit einem Versatz in Längsrichtung des Hauptkörpers 140 von jeweils 50 mm. Dadurch können die jeweiligen Aufnahmevorrichtungen 121 an den jeweiligen Montierelementen 124 zB. durch Verschrauben montiert werden. Das erleichtert die Montage und Wartung der oberen Kranzkonstruktion 120. Vorzugsweise sind die Bohrlöcher 125, 126 rotationssymmetrisch zueinander angeordnet. Das heißt, dass die Bohrlöcher 125 eines Montierelements 124 den Bohrlöcher 126 einer Aufnahmevorrichtung 121 entsprechen, wenn die Aufnahmevorrichtung 121 in einer ersten Orientierung am Montierelement 124 befestigt ist, und die Bohrlöcher 125 des Montierelements 124 den Bohrlöcher 126 der Aufnahmevorrichtung 121 auch dann entsprechen, wenn die Aufnahmevorrichtung 121 um 180° (in Längsrichtung) rotiert zur ersten Orientierung angebracht ist. Dadurch können die jeweiligen Aufnahmevorrichtungen 121 der Vielzahl von Aufnahmevorrichtungen 121 in verschiedenen Höhen an jeweiligen Montierelementen 124 der Vielzahl von Montierelementen 124, entsprechend der jeweiligen Rotation der Aufnahmevorrichtungen 121, angebracht werden. Vorzugsweise sind die Bohrlöcher 125 mit einem ersten Abstand zu einem ersten Ende der Aufnahmevorrichtungen 121 und mit einem zweiten Abstand, der größer als der erste Abstand ist, zu einem zweiten Ende der Aufnahmevorrichtungen 121 angeordnet. In einem ersten Beispiel sind die Aufnahmevorrichtungen 121 derart an jeweiligen Montierelementen 124 angebracht, dass sich das erste Ende in Richtung des Bodenelements 150 erstreckt, und sich das zweite Ende in einer Richtung entgegen des Bodenelements 150 erstreckt. In dieser Konfiguration ist ein Abstand vom Bodenelement 150 zum ersten Ende ein erster Abstand und zum zweiten Ende ein zweiter Abstand. In einem zweiten Beispiel sind die Aufnahmevorrichtungen 121 um 180° in Längsrichtung rotiert an den Montierelementen 124 angebracht. Dadurch erstreckt sich das zweite Ende in Richtung des Bodenelements 150 und das erste Ende erstreckt sich in einer Richtung entgegen dem Bodenelement 150. In dieser Konfiguration ist ein Abstand vom Bodenelement 150 zum zweiten Ende ein dritter Abstand und zum ersten Ende ein vierter Abstand, wobei der dritte Abstand geringer ist als der erste Abstand und der vierte Abstand geringer ist als der dritte Abstand. Demnach kann die Gesamthöhe der Fahrradaufhängung 100 durch Rotation der Aufnahmevorrichtungen 121 um 180° (in Längsrichtung) verändert werden. Im ersten Beispiel können Fahrräder 200 in größerer Höhe vom Boden 300 aufgehängt werden, wodurch insbesondere besonders große Fahrräder 200 an der Fahrradaufhängung 100 angebracht werden. Im zweiten Beispiel können Fahrräder verhältnismäßig nah am Boden 300 aufgehängt werden, wodurch die Lagerung/Entnahme der Fahrräder vereinfacht werden kann. Zusätzlich oder alternativ, kann eine erste Teilmenge der Aufnahmevorrichtungen 121 gemäß dem ersten Beispiel an den Montierelementen 124 montiert werden und eine zweite Teilmenge gemäß dem zweiten Beispiel an den Montierelementen 124 montiert werden. Vorzugsweise in einer alternierenden Weise. Hierdurch kann ermöglicht werden, dass Fahrräder versetzt zueinander an der Halterung angebracht werden, sodass sich die Lenker der einzelnen Fahrräder nicht beeinträchtigen.

Alternativ können die Aufnahmevorrichtungen 121 auch an die Montierelementen 124 geschweißt werden, vorzugsweise in einer Anordnung, die der verschraubten Variante entspricht.

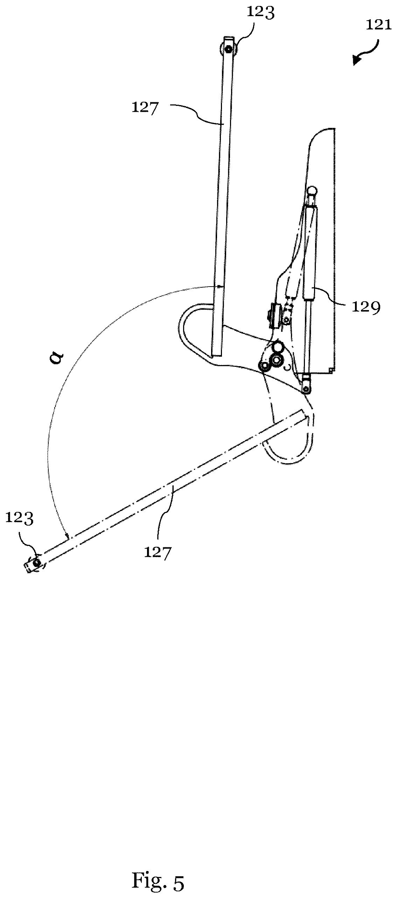

Die in der Figur 4 beispielhaft gezeigte Aufnahmevorrichtung 121 umfasst eine ebene Fläche, die die Bohrlöcher 126 aufweist, die den Positionen der Bohrlöcher 125 des entsprechenden Montierelements 124 entsprechen. Durch ein Befestigungselement 128, hier eine Schraube, kann die Aufnahmevorrichtung 121 an das Montierelement 124 (lösbar) montiert werden. An der ebenen Fläche der Aufnahmevorrichtung 121 können direkt ein oder mehrere Eingriffselemente 123 angebracht sein, die eingerichtet sind mit dem ersten Rad 210 des Fahrrads 200 in Eingriff zu gelangen, und dieses mit der Aufnahmevorrichtung 121 zu koppeln. Dadurch kann das erste Rad 210, durch die Fahrradaufhängung 100 aufgenommen werden. Zusätzlich, oder alternativ kann die Aufnahmevorrichtung 121 einen weiteren Aufnahmemechanismus umfassen, mit dem das erste Rad 210 des Fahrrads aufgenommen werden kann. Ein beispielhafter Aufnahmemechanismus ist in Figur 5 beispielhaft gezeigt. In diesen Beispiel umfasst die Aufnahmevorrichtung 121 zusätzlich einen Hebel 127, der mit der ebenen Fläche der Aufnahmevorrichtung mechanisch gekoppelt ist. Insbesondere ist der Hebel 127 schwenkbar mit der ebenen Fläche der Aufnahmevorrichtung 121 gekoppelt, wobei der Hebel 127 nicht direkt an der ebenen Fläche angebracht sein muss. In den Beispielen der Figuren 1, 3, 4 und 5 ist der Hebel 127 an einem ersten Ende (proximalen Ende) mit der ebenen Fläche der Aufnahmevorrichtung 121 gekoppelt und weist an einem zweiten Ende (an seinem distalen Ende relativ zum Drehpunkt der Schwenkbewegung des Hebels 127) ein Eingriffselement 123 auf. Vorzugsweise ist das Eingriffselement 123 drehbar an dem Hebel 127 montiert. Vorzugsweise ist der Hebel 127 mit seinem proximalen Ende an einer Position der Aufnahmevorrichtung 121 montiert, die relativ nah am Bodenelement 150 ist, wobei sich das distale Ende des Hebels 127 in eine Richtung entgegen der Position des Bodenelements 150 erstreckt. Dadurch kann durch Ziehen des Hebels 127 in Richtung des Bodenelements 150 ein Abstand zwischen dem Eingriffselement 123 und einem am Boden stehenden Fahrrads 200 reduziert werden, wodurch das erste Rad 210 des Fahrrads vereinfacht mit dem Eingriffselement 123 in Eingriff gebracht werden kann. Vorzugsweise ist der Hebel 127 derart mit der ebenen Fläche der Aufnahmevorrichtung 121 gekoppelt, dass ein Ziehen des Hebels 127 ein Bewegen des Hebels 127 in eine Richtung entgegen der Position des Montierelements 124 entspricht. Das heißt, aus Perspektive der oberen Kranzkonstruktion 120 wird der Hebel 127 nach außen gezogen. Vorzugsweise ist der Hebel 127 derart mit der ebenen Fläche der Aufnahmevorrichtung 121 gekoppelt, dass ein Bewegungsradius des Hebels 127 in Richtung des Bodenelements einem Winkel α mindestens 90°, vorzugsweise mindestens 100°, bevorzugt mindestens 110°, noch bevorzugter mindestens 120° und am bevorzugten mindestens 125° entspricht. In dem Beispiel der Figur 5 beträgt der Bewegungsradius des Hebels 127 125°. Vorzugsweise umfasst die Aufnahmevorrichtung 121 ferner ein Rückstellelement, wie zB. eine Feder 129. Das Rückstellelement ist eingerichtet den Hebel 127 der Aufnahmevorrichtung 121 in seine Ausgangsposition vorzuspannen, bzw. zu bewegen. Die Ausgangsposition des Hebels ist eine Position, in der sich der Hebel 127 im Wesentlichen parallel zum Hauptkörper 140 erstreckt, wobei das distale Ende des Hebels 127, das das Eingriffselement 123 umfasst, einen Abstand zum Bodenelement 150 aufweist, der größer ist als ein Abstand des proximalen Endes des Hebels 127, an dem der Hebel 127 mit der ebenen Fläche der Aufnahmevorrichtung 121 gekoppelt ist, zum Bodenelement 150. Demnach ist das Rückstellelement auch eingerichtet das Eingriffselement 123 in seine Ausgangsposition zu bewegen/vorzuspannen. Vorzugsweise ist das Rückstellelement mit einem Umwerfelement gekoppelt, dass der Hebel 127 zwei stabile Positionen aufweist. Eine erste Position, in der der Hebel 127 in seiner Ausgangsposition ist, und eine zweite Position, in der der Hebel seinen maximalen Bewegungsradius entfernt von der Ausgangsposition bewegt ist. Das erleichtert es dem Benutzer das erste Rad 210 mit dem Eingriffselement 123 in Eingriff zu bringen, ohne viel Kraft auf den Hebel 127 aufbringen zu müssen.

Sobald das erste Rad 210 mit dem Eingriffselement 123 in Eingriff gebracht wurde, kann dann das erste Rad 210 in Richtung Ausgangsposition des Hebels 127 bewegt werden. In Ausführungsformen mit Rückstellelement vereinfacht das Rückstellelement das Bewegen des Hebels 127 mit dem ersten Rad 210 in die Ausgangsposition des Hebels 127. Vorzugsweise weist das Rückstellelement eine Rückstellkraft auf, die verhindert, dass das Eigengewicht des Fahrrads 200 den Hebel aus seiner Ausgangsposition bewegt. Dadurch kann das Fahrrad 200 sicher in der Aufnahmevorrichtung 121 gehalten werden.

Figur 5 zeigt ein Fahrrad 200, das in die Fahrradaufhängung 100 gemäß oberer Ausführungsformen und Beispiele aufgenommen ist. Wie aus Figur 5 ersichtlich, wird durch die relative Anordnung der oberen Kranzkonstruktion 120 zu der unteren Kranzkonstruktion 130 das erste Rad 210 des Fahrrads in einer ersten Aufnahmevorrichtung 121 aufgenommen und das zweite Rad 220 des Fahrrads in einer ersten Stützvorrichtung gestützt, wodurch das Fahrrad 200 sicher und stabil von der Fahrradaufhängung vertikal aufgenommen und gelagert wird. Ein weitere Fahrrad 200 ist an seinem ersten Rad 210 mit einem heruntergezogenen Hebel 127 gekoppelt. Durch Anheben des Lenkers des Fahrrads 200 kann das erste Rad 210 dieses Fahrrads 200 in Richtung der Aufnahmevorrichtung 121 bewegt werden, und das zweite Rad 220 dieses Fahrrads 200 in Richtung der Stützvorrichtung 131 bewegt werden.

### BEZUGSZEICHENLISTE

- 100: Fahrradaufhängung
- 110: Haltevorrichtung
- 120: obere Kranzkonstruktion
- 130: untere Kranzkonstruktion
- 121: Aufnahmevorrichtung
- 122, 132: ringförmige Befestigungseinheit
- 123: Eingriffselement
- 124: Montierelement
- 125, 126: Bohrlöcher
- 127: Hebel
- 128: Befestigungselement
- 129: Rückstellelement
- 131: Stützvorrichtung
- 140: Hauptkörper
- 150: Bodenelement
- 151: Aufnahmebereich
- 152, 153: Kugellager
- 154: Endelement
- 155: Stellfuß
- 200: Fahrrad
- 210: erstes Rad
- 220: zweites Rad
- 300: Boden

### Weitere Ausführungsformen

1. Fahrradaufhängung (100) zum Lagern von Elektro-Fahrrädern, die Fahrradaufhängung umfassend:
   einen im Wesentlichen länglichen und/oder zylinderförmigen Hauptkörper (140);
   eine Haltevorrichtung, die an dem zylinderförmigen Hauptkörper befestigt ist, umfassend:
      eine obere Kranzkonstruktion (120) umfassend:
         eine Vielzahl von Montierelementen (124), die mit dem im Wesentlichen länglichen und/oder zylinderförmigen Hauptkörper (140) gekoppelt sind und um diesen im Wesentlichen kreisförmig angeordnet sind;
         eine Vielzahl von Aufnahmevorrichtungen (121), die jeweils an mindestens einem der Vielzahl von Montierelementen (124) befestigt sind, wobei jede Aufnahmevorrichtung (121) der Vielzahl von Aufnahmevorrichtungen eingerichtet ist, ein erstes Rad (210) eines Fahrrads (200) aufzunehmen;
      eine untere Kranzkonstruktion (130) umfassend eine Vielzahl von Stützvorrichtungen (131), wobei jede Stützvorrichtung (131) der Vielzahl von Stützvorrichtungen einer Aufnahmevorrichtung (121) der Vielzahl von Aufnahmevorrichtungen zugeordnet ist, und jede Stützvorrichtung (131) der Vielzahl von Stützvorrichtungen eingerichtet ist, ein zweites Rad (220) des Fahrrads (200) zu stützen; und
      ein Bodenelement (150) in mechanischer Kopplung mit dem Hauptkörper (140), wobei der Hauptkörper (140) unter Zuhilfenahme von Kugellagern und/oder Rollenlagern (152, 153) drehbar um seine Längsachse mit dem Bodenelement (150) gekoppelt ist, wobei
         das Bodenelement (150) eine Wandstärke von mindestens 10 mm aufweist, und/oder
         die Kugellager (152, 153) Rillenkugellager (152) und Kegelrollenlager (153) umfassen, und/oder
         das Bodenelement eine Vollmaterial-Drehwelle beinhaltet, die mit den Kugellagern (152, 153) gekoppelt ist und einen Durchmesser von mindestens 40 mm, vorzugsweise mindestens 43 mm, bevorzugt mindestes 45 und meist bevorzugt mindestens 46 mm aufweist, und/oder
         die Montierelemente (124) U-Profile sind, vorzugsweise gelaserte U-Profile, wobei sich die Flügel der U-Profile in Richtung des im Wesentlichen länglichen und/oder zylinderförmigen Hauptkörper (140) erstrecken.
2. Fahrradaufhängung (100) nach der vorhergehenden Ausführungsform, wobei
   die Vielzahl von Aufnahmevorrichtungen ferner eine Vielzahl von Hebeln (127) umfasst, wobei jeder Hebel (127) der Vielzahl von Hebeln mit jeweils einer Aufnahmevorrichtung (121) der der Vielzahl von Aufnahmevorrichtungen mechanisch gekoppelt ist und eingerichtet ist um die jeweilige eine Aufnahmevorrichtung (121) bewegt zu werden.
3. Fahrradaufhängung (100) nach der vorhergehenden Ausführungsform, wobei
   die Vielzahl von Hebeln (127) ferner jeweils mindestens ein Eingriffselement (123) umfassen, wobei das mindestens eine Eingriffselement (123) eingerichtet ist, mechanisch mit dem ersten Rad (210) des Fahrrads gekoppelt zu werden, wobei das mindestens eine Eingriffselement (123) vorzugsweise an einem distalen Ende des Hebels (127) positioniert ist.
4. Fahrradaufhängung (100) nach einer der vorhergehenden Ausführungsformen, wobei
   die Vielzahl von Aufnahmevorrichtungen (121) und die Vielzahl von Stützvorrichtungen (131) um den Hauptkörper (140) angeordnet sind, wobei die Vielzahl von Aufnahmevorrichtungen (121) im Wesentlichen in einer ersten Position in Längsrichtung um den Hauptkörper (140) angeordnet sind und die Vielzahl von Stützvorrichtung (131) im Wesentlichen in einer zweiten Position in Längsrichtung um den Hauptkörper (140) angeordnet sind, wobei die Vielzahl von Stützvorrichtungen (131) in der Längsrichtung näher am Bodenelement (150) angeordnet ist.
5. Fahrradaufhängung (100) nach einer der vorhergehenden Ausführungsformen, wobei
   das Bodenelement (150) ferner Befestigungselemente (151) umfasst, um mit einem Boden (300), zB. einem Parkplatz, verbunden zu werden, wobei das Bodenelement (150) eingerichtet ist mit dem Boden (300) verbunden zu werden, dass der Hauptkörper (140) im Wesentlichen senkrecht zum Boden (300) angeordnet ist, wenn das Bodenelement (150) mit dem Boden (300) verbunden ist.
6. Fahrradaufhängung (100) nach einer der vorhergehenden Ausführungsformen, wobei die Stützvorrichtungen (131) längliche, vorzugsweise gebogene, Metallbleche umfassen, die in der Längsrichtung des im Wesentlichen länglichen und/oder zylinderförmigen Hauptkörpers (140) angeordnet sind und im Wesentlichen eine U- oder V-Form zur Aufnahme des zweiten Rads (220) aufweisen.
7. Fahrradaufhängung (100) nach einer der vorhergehenden Ausführungsformen, wobei die Schenkel der im Wesentlichen U- oder V-förmigen Metallbleche in eine Richtung entgegengesetzt des im Wesentlichen länglichen und/oder zylinderförmigen Hauptkörper (140) erstrecken.
8. Fahrradaufhängung (100) nach einer der vorhergehenden Ausführungsformen, wobei die obere- und untere Kranzkonstruktion kreisförmig um den Hauptkörper (140) angeordnet sind.
9. Fahrradaufhängung (100) nach einer der vorhergehenden Ausführungsformen, wobei die Vielzahl von Montierelementen (124) an einer ersten ringförmigen Befestigungseinheit (122) befestigt sind, wobei die erste ringförmige Befestigungseinheit (122) um den im Wesentlichen länglichen und/oder zylinderförmigen Hauptkörper (140) angeordnet ist.
10. Fahrradaufhängung (100) nach der vorhergehenden Ausführungsform, wobei die erste ringförmige Befestigungseinheit (122) mit Streben an dem im Wesentlichen länglichen und/oder zylinderförmigen Hauptkörper (140) befestigt ist.
11. Fahrradaufhängung (100) nach einer der vorhergehenden Ausführungsformen, wobei die Vielzahl von Stützelementen (131) an einer zweiten ringförmigen Befestigungseinheit (132) befestigt sind, wobei die zweite ringförmige Befestigungseinheit (132) um den im Wesentlichen länglichen und/oder zylinderförmigen Hauptkörper (140) angeordnet ist.
12. Fahrradaufhängung (100) nach der vorhergehenden Ausführungsform, wobei die zweite ringförmige Befestigungseinheit (132) mit Streben an dem im Wesentlichen länglichen und/oder zylinderförmigen Hauptkörper (140) befestigt ist.
13. Fahrradaufhängung (100) nach einer der Ausführungsformen 10 oder 12, wobei die Streben Rechteckrohrprofile enthalten.
14. Fahrradaufhängung (100) nach einer der Ausführungsformen 10, 12 oder 13, wobei die die obere- und/oder die untere Kranzkonstruktion (120, 130) drei Streben aufweist.
15. Fahrradaufhängung (100) nach einer der vorhergehenden Ausführungsformen, wobei
   die Vielzahl von Montierelementen (124) eine erste Vielzahl von Bohrlöchern (125), die in Längsrichtung des im Wesentlichen länglichen und/oder zylinderförmigen Hauptkörpers (140) beabstandet sind, aufweist, und
   die Vielzahl von Aufnahmevorrichtungen (121) eine zweite Vielzahl von Bohrlöchern (126) aufweist, die den entsprechenden Bohrlöchern der Montierelemente (124) entsprechen.
16. Fahrradaufhängung (100) nach der vorhergehenden Ausführungsform, wobei die erste (125) und zweite (126) Vielzahl von Bohrlöchern jeweils rotationssymmetrisch zueinander angeordnet sind, dass die erste Vielzahl von Bohrlöchern (125) vor und nach Rotation der Aufnahmevorrichtung um 180° den Positionen der zweiten Vielzahl von Bohrlöchern (126) entspricht.
17. Fahrradaufhängung (100) nach einer der vorhergehenden Ausführungsformen, wobei die Vielzahl von Aufnahmevorrichtungen (121) und die Vielzahl von Stützelementen (131) im Wesentlichen parallel zum im Wesentlichen länglichen und/oder zylinderförmigen Hauptkörper (140) angeordnet sind.
18. Fahrradaufhängung (100) nach einer der vorhergehenden Ausführungsformen, wobei die Vielzahl von Aufnahmevorrichtungen (121) und die Vielzahl von Stützelementen (131) mit einem im Wesentlichen gleichen Abstand von dem im Wesentlichen länglichen und/oder zylinderförmigen Hauptkörper (140) beabstandet sind.
19. Fahrradaufhängung (100) nach einer der vorhergehenden Ausführungsformen, wobei das Bodenelement (150) einen Zylinder (151) zur Aufnahme des im Wesentlichen länglichen und/oder zylinderförmigen Hauptkörpers (140) aufweist, wobei der Innendurchmesser des Zylinders im Wesentlichen dem Außendurchmesser des im Wesentlichen länglichen und/oder zylinderförmigen Hauptkörpers (140) entspricht.
20. Fahrradaufhängung (100) nach der vorhergehenden Ausführungsform, wobei der im Wesentlichen längliche und/oder zylinderförmige Hauptkörper (140), unter Zuhilfenahme der Kugellager (152, 153), in dem Zylinder drehbar gelagert ist.
21. Fahrradaufhängung (100) nach einer der Ausführungsformen 19 oder 20, wobei der Zylinder (151) ein Rillenkugellager (152) an seinem den Kranzkonstruktionen zugewandten Ende aufweist und ein Kegelrollenlager (153) an seinem dem Boden zugewandten Ende aufweist.
22. Fahrradaufhängung (100) nach der vorhergehenden Ausführungsform, wobei der Außendurchmesser des im Wesentlichen länglichen und/oder zylinderförmigen Hauptkörpers (140) dem Innendurchmesser des Kegelrollenlagers entspricht.

## Patentansprüche

1. Fahrradaufhängung (100) zum Lagern von Elektro-Fahrrädern, die Fahrradaufhängung umfassend:
einen im Wesentlichen länglichen und/oder zylinderförmigen Hauptkörper (140);
eine Haltevorrichtung, die an dem zylinderförmigen Hauptkörper befestigt ist, umfassend:
eine obere Kranzkonstruktion (120) umfassend:
eine Vielzahl von Montierelementen (124), die mit dem im Wesentlichen länglichen und/oder zylinderförmigen Hauptkörper (140) gekoppelt sind und um diesen im Wesentlichen kreisförmig angeordnet sind;
eine Vielzahl von Aufnahmevorrichtungen (121), die jeweils an mindestens einem der Vielzahl von Montierelementen (124) befestigt sind, wobei jede Aufnahmevorrichtung (121) der Vielzahl von Aufnahmevorrichtungen eingerichtet ist, ein erstes Rad (210) eines Fahrrads (200) aufzunehmen;
eine untere Kranzkonstruktion (130) umfassend eine Vielzahl von Stützvorrichtungen (131), wobei jede Stützvorrichtung (131) der Vielzahl von Stützvorrichtungen einer Aufnahmevorrichtung (121) der Vielzahl von Aufnahmevorrichtungen zugeordnet ist, und jede Stützvorrichtung (131) der Vielzahl von Stützvorrichtungen eingerichtet ist, ein zweites Rad (220) des Fahrrads (200) zu stützen; und
ein Bodenelement (150) in mechanischer Kopplung mit dem Hauptkörper (140), wobei der Hauptkörper (140) unter Zuhilfenahme von Kugellagern und/oder Rollenlagern (152, 153) drehbar um seine Längsachse mit dem Bodenelement (150) gekoppelt ist, wobei
das Bodenelement (150) eine Wandstärke von mindestens 10 mm aufweist, und/oder
die Kugellager (152, 153) Rillenkugellager (152) und Kegelrollenlager (153) umfassen, und/oder
das Bodenelement eine Vollmaterial-Drehwelle beinhaltet, die mit den Kugellagern (152, 153) gekoppelt ist und einen Durchmesser von mindestens 40 mm, vorzugsweise mindestens 43 mm, bevorzugt mindestes 45 und meist bevorzugt mindestens 46 mm aufweist, und/oder
die Montierelemente (124) U-Profile sind, vorzugsweise gelaserte U-Profile, wobei sich die Flügel der U-Profile in Richtung des im Wesentlichen länglichen und/oder zylinderförmigen Hauptkörper (140) erstrecken.

2. Fahrradaufhängung (100) nach dem vorhergehenden Anspruch, wobei
die Vielzahl von Aufnahmevorrichtungen ferner eine Vielzahl von Hebeln (127) umfasst, wobei jeder Hebel (127) der Vielzahl von Hebeln mit jeweils einer Aufnahmevorrichtung (121) der der Vielzahl von Aufnahmevorrichtungen mechanisch gekoppelt ist und eingerichtet ist um die jeweilige eine Aufnahmevorrichtung (121) bewegt zu werden.

3. Fahrradaufhängung (100) nach dem vorhergehenden Anspruch, wobei
die Vielzahl von Hebeln (127) ferner jeweils mindestens ein Eingriffselement (123) umfassen, wobei das mindestens eine Eingriffselement (123) eingerichtet ist, mechanisch mit dem ersten Rad (210) des Fahrrads gekoppelt zu werden, wobei das mindestens eine Eingriffselement (123) vorzugsweise an einem distalen Ende des Hebels (127) positioniert ist.

4. Fahrradaufhängung (100) nach einem der vorhergehenden Ansprüche, wobei
die Vielzahl von Aufnahmevorrichtungen (121) und die Vielzahl von Stützvorrichtungen (131) um den Hauptkörper (140) angeordnet sind, wobei die Vielzahl von Aufnahmevorrichtungen (121) im Wesentlichen in einer ersten Position in Längsrichtung um den Hauptkörper (140) angeordnet sind und die Vielzahl von Stützvorrichtung (131) im Wesentlichen in einer zweiten Position in Längsrichtung um den Hauptkörper (140) angeordnet sind, wobei die Vielzahl von Stützvorrichtungen (131) in der Längsrichtung näher am Bodenelement (150) angeordnet ist.

5. Fahrradaufhängung (100) nach einem der vorhergehenden Ansprüche, wobei
das Bodenelement (150) ferner Befestigungselemente (151) umfasst, um mit einem Boden (300), zB. einem Parkplatz, verbunden zu werden, wobei das Bodenelement (150) eingerichtet ist mit dem Boden (300) verbunden zu werden, dass der Hauptkörper (140) im Wesentlichen senkrecht zum Boden (300) angeordnet ist, wenn das Bodenelement (150) mit dem Boden (300) verbunden ist.

6. Fahrradaufhängung (100) nach einem der vorhergehenden Ansprüche, wobei die Stützvorrichtungen (131) längliche, vorzugsweise gebogene, Metallbleche umfassen, die in der Längsrichtung des im Wesentlichen länglichen und/oder zylinderförmigen Hauptkörpers (140) angeordnet sind und im Wesentlichen eine U- oder V-Form zur Aufnahme des zweiten Rads (220) aufweisen.

7. Fahrradaufhängung (100) nach einem der vorhergehenden Ansprüche, wobei die Schenkel der im Wesentlichen U- oder V-förmigen Metallbleche in eine Richtung entgegengesetzt des im Wesentlichen länglichen und/oder zylinderförmigen Hauptkörper (140) erstrecken.

8. Fahrradaufhängung (100) nach eine der vorhergehenden Ansprüche, wobei die obere- und untere Kranzkonstruktion kreisförmig um den Hauptkörper (140) angeordnet sind.

9. Fahrradaufhängung (100) nach einem der vorhergehenden Ansprüche, wobei die Vielzahl von Montierelementen (124) an einer ersten ringförmigen Befestigungseinheit (122) befestigt sind, wobei die erste ringförmige Befestigungseinheit (122) um den im Wesentlichen länglichen und/oder zylinderförmigen Hauptkörper (140) angeordnet ist.

10. Fahrradaufhängung (100) nach dem vorhergehenden Anspruch, wobei die erste ringförmige Befestigungseinheit (122) mit Streben an dem im Wesentlichen länglichen und/oder zylinderförmigen Hauptkörper (140) befestigt ist.

11. Fahrradaufhängung (100) nach einem der vorhergehenden Ansprüche, wobei die Vielzahl von Stützelementen (131) an einer zweiten ringförmigen Befestigungseinheit (132) befestigt sind, wobei die zweite ringförmige Befestigungseinheit (132) um den im Wesentlichen länglichen und/oder zylinderförmigen Hauptkörper (140) angeordnet ist.

12. Fahrradaufhängung (100) nach dem vorhergehenden Anspruch, wobei die zweite ringförmige Befestigungseinheit (132) mit Streben an dem im Wesentlichen länglichen und/oder zylinderförmigen Hauptkörper (140) befestigt ist.

13. Fahrradaufhängung (100) nach einem der Ansprüche 10 oder 12, wobei die Streben Rechteckrohrprofile enthalten.

14. Fahrradaufhängung (100) nach einem der Ansprüche 10, 12 oder 13, wobei die die obere- und/oder die untere Kranzkonstruktion (120, 130) drei Streben aufweist.

15. Fahrradaufhängung (100) nach einem der vorhergehenden Ansprüche, wobei
die Vielzahl von Montierelementen (124) eine erste Vielzahl von Bohrlöchern (125), die in Längsrichtung des im Wesentlichen länglichen und/oder zylinderförmigen Hauptkörpers (140) beabstandet sind, aufweist, und
die Vielzahl von Aufnahmevorrichtungen (121) eine zweite Vielzahl von Bohrlöchern (126) aufweist, die den entsprechenden Bohrlöchern der Montierelemente (124) entsprechen.
